# EUROPÄISCHE PATENTSCHRIFT

(11) **EP 2 757 406 B1**
(45) Veröffentlichungstag und Bekanntmachung des Hinweises auf die Patenterteilung: **21.03.2018**
(21) Anmeldenummer: 14000150.4
(22) Anmeldetag: 15.01.2014
(51) Int. Cl.: G02C 5/22

(54) **Brillenbügelscharnier**
Spectacle hinge
Charnière de lunettes

(30) Priorität: 17.01.2013 DE 102013100477
(43) Veröffentlichungstag der Anmeldung: 23.07.2014
(73) Patentinhaber: Temming Holding GmbH, 33334 Gütersloh (DE)
(72) Erfinder: Temming, Markus, 33334 Gütersloh (DE)
(74) Vertreter: Rolf, Gudrun

(56) Entgegenhaltungen:
- WO-A1-95/35524
- WO-A1-2006/117206
- WO-A1-2009/147318
- WO-A1-2012/117174
- CN-U- 201 673 314

## Beschreibung

Die Erfindung betrifft ein Brillenbügelscharnier einer Brille aus einem brillenfassungsfesten Backenteil auf jeder Seite der Brillenfassung mit je einer Ausnehmung und mit einem dort eingreifenden brillenbügelfesten Gelenkteil eines Brillenbügels, sowie mit einem dazwischen angeordneten Scharnierstift.

Es ist ein Scharniergelenk für einen Brillenbügel einer Brille bekannt, DE 20 2012 003 107 U1, das einen Backenteil mit einer zylindrischen Ausnehmung aufweist, in die Scharnierachsstifte des Brillenbügels von oben und unten eingreifen, wobei das Ende des Brillenbügels zur Montage elastisch verformt werden muss.

Nachteilig an diesem vorbekannten Scharniergelenkt für eine Brille ist, dass die erforderliche Elastizität eines Brillenbügelendes zum einen nicht bei jedem gewünschten Material eines Brillenbügels vorhanden ist und zum anderen, dass die Elastizität zu einer ungewollten Verformung des Scharnierbereiches einer Brille und dadurch zum Verlust eines Brillenbügels führen kann.

Aufgabe der Erfindung ist es, ein neuartiges Brillenbügelscharnier zur Verfügung zu stellen, welches wenig Bauteile aufweist, einfach und leicht zu montieren und zu demontieren ist und ein stabiles, belastbares Funktionsteil bildet, ohne dass ein Bügel ungewollt aus dem Scharniergelenkt einer Brille entfernt werden kann.

Die Lösung dieser Aufgabe erfolgt in Verbindung mit den Oberbegriffsmerkmalen erfindungsgemäß aus den technischen Merkmalen des kennzeichnenden Teils des ersten Patentanspruches. Die Ausnehmung ist hierzu im Bereich einer vertikalen Richtung verlaufenden Schwenkachse des Brillenbügels mit zwei in Richtung der Scharnierachse einander gegenüberliegenden, zueinander gerichteten, aber voneinander beabstandeten Vorsprüngen ausgestattet, die maximal die Breite des Durchmessermaßes des Scharnierstiftes besitzen, wobei dieser seinerseits zwei stirnseitige Aufnahmenuten aufweist in die im montierten Zustand die korrespondierenden Vorsprünge eingesetzt sind, und dass das Gelenkteil mit einer Stiftaufnahme für den Scharnierstift versehen ist, sowie zwei mit den Abmessungen der stirnseitigen Aufnahmen entsprechenden Montagenuten, die sich stirnseitig radial aus der Stiftaufnahme bis zur seitlichen Oberfläche des Gelenkteils erstrecken und in einer Montageposition des Brillenbügels mit den Aufnahmen des Scharnierstiftes fluchten, derart, dass zur Montage die Vorsprünge durch die Montagenuten in die Aufnahmenuten geschoben werden können.

Hierdurch wird es möglich das brillenbügelfeste Gelenkteil in seiner Montageposition mit seinen Montagenuten seitlich über die Vorsprünge zu schieben, wobei das Gelenkteil so weit bewegt wird, bis die Vorsprünge in die stirnseitigen Aufnahmen in den Scharnierstift eingreifen, woraufhin durch ein Verschwenken des Brillenbügels der Scharnierstift als Drehachse für den Brillenbügel dient, ohne dass dieser wieder seitlich aus der Ausnehmung heraus bewegt werden kann.

Das erfinderische Brillenbügelscharnier kommt somit mit sehr wenig Bauteilen aus und ist zudem vollkommen werkzeugfrei leicht und einfach montierbar, wobei der leichte Wechsel eines Brillenbügels weiterhin dazu benutzt werden kann, einer Brillenfassung gleichzeitig mehrere verschiedene Brillenbügel zuzuordnen, die wahlfrei vom Brillenträger ausgetauscht und variiert werden können. Die einzelnen Bauteile sind dabei so vorteilhaft konstruiert, dass sie bei einem Austausch eines Brillenbügels nicht beschädigt oder sonst in irgendeiner Art oder Weise bleibend mechanisch verformt werden, so dass jedes Bauteil zerstörungsfrei mehrfach verwendet werden kann.

Die verwendeten Materialien benötigen für die Funktionsfähigkeit des Brillenbügelscharniers keine Elastizität, so dass auf das Brillenbügelscharnier einwirkende Kräfte nicht zu einer ungewollten elastischen Verformung und Zerlegung des Scharniers führen können.

Weitere vorteilhafte Ausgestaltungen des Gegenstandes der Erfindung ergeben sich mit und in Kombination aus den nachfolgenden Unteransprüchen.

Gemäß einer besonders bevorzugten Ausführungsform der Erfindung sind die Montagenuten im Gelenkteil des Brillenbügels in einem Winkel α zur Längsachse eingebracht, der kleiner ist als 90°, so dass ein Brillenbügel zur Montage mit seinem Ende durch die dem Brillenbügelscharnier entgegengesetzte Brillenglasöffnung der Brillenfassung hindurchgeführt werden muss, wenn er nicht zur Montage stark elastisch verformt werden soll. Durch die schräge Anordnung der Montagenut wird also ein ungewolltes Verlieren des Brillenbügels unmöglich gemacht, da zum kräftefreien Austausch eines Brillenbügels zunächst das dem Brillenbügelscharnier gegenüberliegende Brillenglas entfernt werden muß.

Entsprechend einer weiteren vorteilhaften Variante der Erfindung sind das Gelenkteil und der Scharnierstift aus aufeinander abgestimmten Materialien ausgebildet, wodurch die geforderten Laufeigenschaften des Brillenbügelscharniers über die Lebensdauer einer Brille festgelegt werden können. Hierzu dienen die Eigenschaften der Gleit- und Haftreibung oder der Einfluss der Passungen, wobei die verwendeten Materialien identisch oder aus Materialkombinationen bestehen können, wie beispielsweise aus einem Scharnierstift aus Metall und einem Gelenkteil aus Kunststoff, einem Scharnierstift aus Kunststoff und einem Gelenkteil aus Metall oder auch aus einem Scharnierstift aus Kunststoff und einem Gelenkteil aus Holz oder auch aus weiteren denkbaren Materialkombinationen. Als Passungen kommen leichte Presspassungen zur Anwendung, die dazu führen, dass ein Brillenbügel nur gegen einen leichten Widerstand verschwenkbar ist und in jedem kräftefreien Zustand in seiner derzeitigen Position verharrt.

Bei einer weiteren bevorzugten Variation ist die Ausnehmung im Backenteil bis auf die Vorsprünge etwa rechtwinklig ausgebildet, so dass sie einen rundum geschlossenen oder auch einen nach hinten geöffneten Rahmen bildet, in dem die Vorsprünge seitlich versetzt angeordnet sind, sodass das Gelenkteil im freien Bereich der Ausnehmung noch daneben in die Ausnehmung eingeführt oder das Gelenkteil frei von der Seite in die Ausnehmung eingeschoben werden kann, wozu der Brillenbügel mit seinen Montagenuten in eine Flucht mit den Vorsprüngen geschwenkt sein muß, um anschließend seitlich so weit verschoben werden zu können, bis die Mittelachse des Scharnierstiftes mit der Schwenkachse übereinstimmt, woraufhin der Brillenbügel durch ein Zurückschwenken um diese Schwenkachse formschlüssig in der Ausnehmung festgelegt ist, wobei die benachbart den Vorsprüngen gelegenen oberen und unteren Flächen der Ausnehmung Anschlagflächen für das Gelenkteil bilden und der Brillenbügel um mehr als 90° frei um die Schwenkachse herum drehbar ist.

Vorteilhaft ist weiterhin die Ausgestaltung des Backenteiles mit einem nach hinten weisenden Bereich des geschlossenen oder seitlich offenen Rahmens der Ausnehmung, der mindestens eine Anschlagfläche für mindestens eine korrespondierende Anschlagfläche des Gelenkteiles auf der dem Montageschlitz entgegengesetzten Seite des Brillenbügels bildet. Das Gelenkteil eines Brillenbügels einer anderen bevorzugten Variante des erfinderischen Brillenbügelscharniers weist alternativ oder zusätzlich eine vordere Anschlagfläche für eine vordere innere Anschlagfläche des Rahmens auf, sodass der Backenteil einer solchen Ausführungsform mit nur einer vorderen Anschlagfläche sehr viel kürzer ausgebildet werden kann. Ausführungsformen mit vorderen und hinteren Anschlagflächen des Rahmens und des Gelenkteils sind also ebenfalls denkbar. Alle Anschlagflächen sind jedoch bevorzugt so ausgebildet, dass sie in einer etwa rechtwinkligen Funktionsstellung des Brillenbügels zum Brillenmittelteil als Bewegungsbegrenzung aneinander anliegen.

Das erfinderische Brillenscharnier ist gemäß einer bevorzugten Version der Erfindung vollkommen frei von mechanischen oder stoffschlüssigen Verbindungsmitteln, ebenso wie es komplett ohne Klebeverbindungen auskommt, so dass die beteiligten Bauteile gegebenenfalls wiederverwendet werden können, etwa der Scharnierstift für unterschiedliche Brillenbügel oder ein mit einem Scharnierstift versehender Brillenbügel für unterschiedliche Brillenfassungen.

Nachfolgend ist ein Ausführungsbeispiel der Erfindung anhand von Zeichnungen näher beschrieben. Es zeigen:
- Fig. 1: eine 3D-Explosionsdarstellung der Bauteile des Brillenbügelscharniers,
- Fig. 2: eine 3D-Darstellung des Brillenbügelscharniers in einem Montagezustand,
- Fig. 3: eine 3D-Darstellung des Brillenbügelscharniers gemäß Fig. 2 in einem fertig montierten Zustand,
- Fig. 4: eine 3D-Darstellung des Brillenbügelscharniers gemäß Fig. 3 in teilweise verschwenktem Zustand des Brillenbügels,
- Fig. 5: eine Aufsicht auf ein Brillenbügelscharnier gemäß einer der Figuren 1-4 in einer Funktionsstellung eines Brillenbügels,
- Fig. 6: eine 3D-Darstellung einer Brillenfassung im Montagezustand des Brillenbügels gemäß Fig. 2,
- Fig. 7: eine 3D-Explosionsdarstellung einer ersten Variante der Bauteile des Brillenbügelscharniers,
- Fig. 8: eine 3D-Explosionsdarstellung einer zweiten Variante der Bauteile des Brillenbügelscharniers,
- Fig. 9: eine 3D-Darstellung des Brillenbügelscharniers gemäß Fig. 8 in einem fertig montierten und teilweise verschwenkten Zustand des Brillenbügels,
- Fig. 10: eine Aufsicht auf ein Brillenbügelscharnier gemäß einer der Figuren 8-9 in einer Funktionsstellung eines Brillenbügels.

Die Brille besteht aus einer Brillenfassung 6 mit zwei seitlichen, etwa rechtwinklig umgeformten flachen Backenteilen 1;21;31 und zwei Brillenbügeln 7;17, die jeweils über ein Brillenbügelscharnier miteinander verbunden sind, sowie aus zeichnerisch nicht dargestellten Brillengläsern.

Das Brillenbügelscharnier ist am endseitigen Gelenkteil 3;18 eines Brillenbügels 7;17 angeordnet und weist eine zylindrische Stiftaufnahme 10 für einen Scharnierstift 4 auf, welcher seinerseits auf jeder Stirnseite mit einer schlitzförmigen Aufnahme 9 versehen ist, die jeweils in Form von Nuten ausgeführt sind und koaxial zueinander verlaufen. Die Länge des Scharnierstiftes 4 und der Stiftaufnahme 10 entspricht dabei der Höhe des Gelenkteils 3;18 sowie der Höhe der Ausnehmung 2;22;32 im Bereich der Vorsprünge 8.

Im Gelenkteil 3;18 sind zu den Aufnahmen 9 im Scharnierstift 4 korrespondierende Montagenuten 11 vorgesehen, die sich in einer Flucht mit den Aufnahmenuten 9 und in deren Tiefe bis zu Oberfläche des Gelenkteils 3;18 erstrecken und zwar in einem Winkel α zum Brillenbügel, der kleiner ist als 90°.

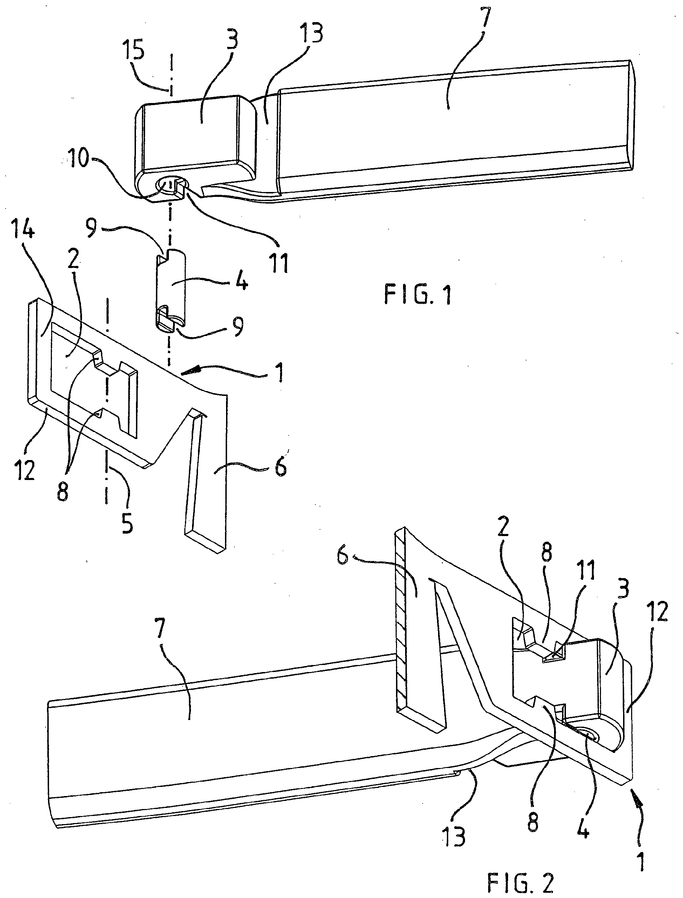

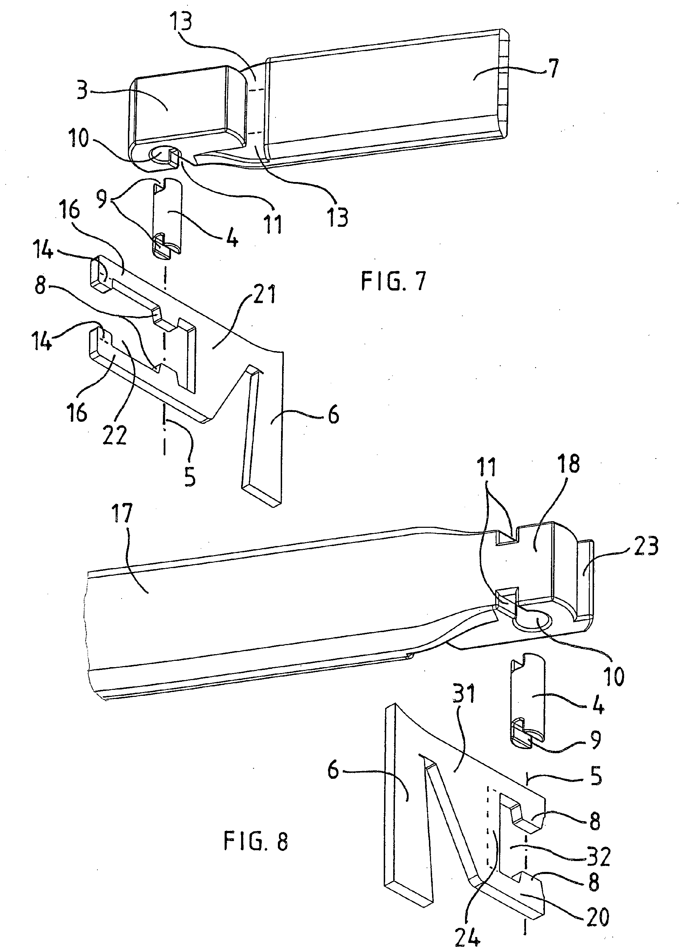

Bei der ersten und zweiten Variante des Brillenbügelscharniers, wie sie in den Figuren 1-6 und in Figur 7 dargestellt sind, ist im Übergang vom Gelenkteil 3 zum Brillenbügel 7 das Gelenkteil 3 mit einer Anschlagfläche 13 ausgestattet, gegen die eine Anschlagfläche 14 des Rahmens 12 eines Backenteils 1 anschlägt bzw. gegen die zwei Anschlagflächen 14 des hinten offenen Rahmens 16 eines Backenteils 21 anschlagen.

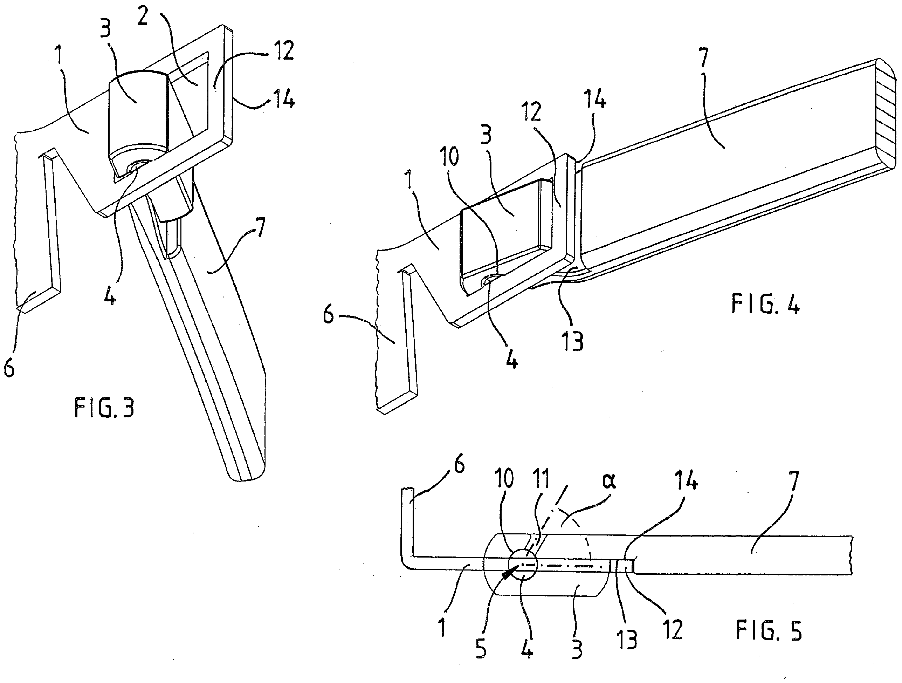

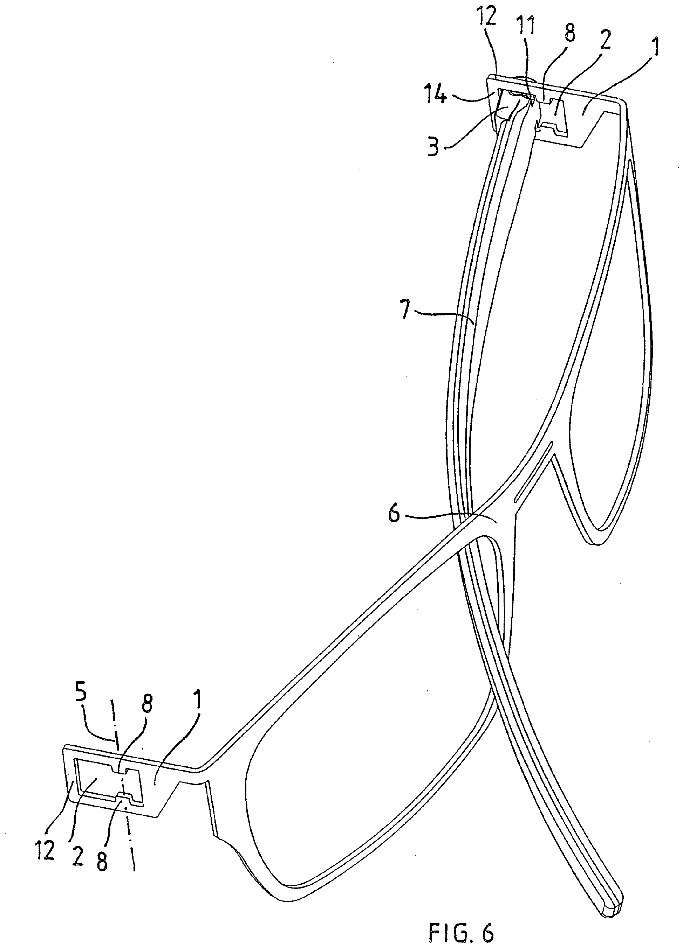

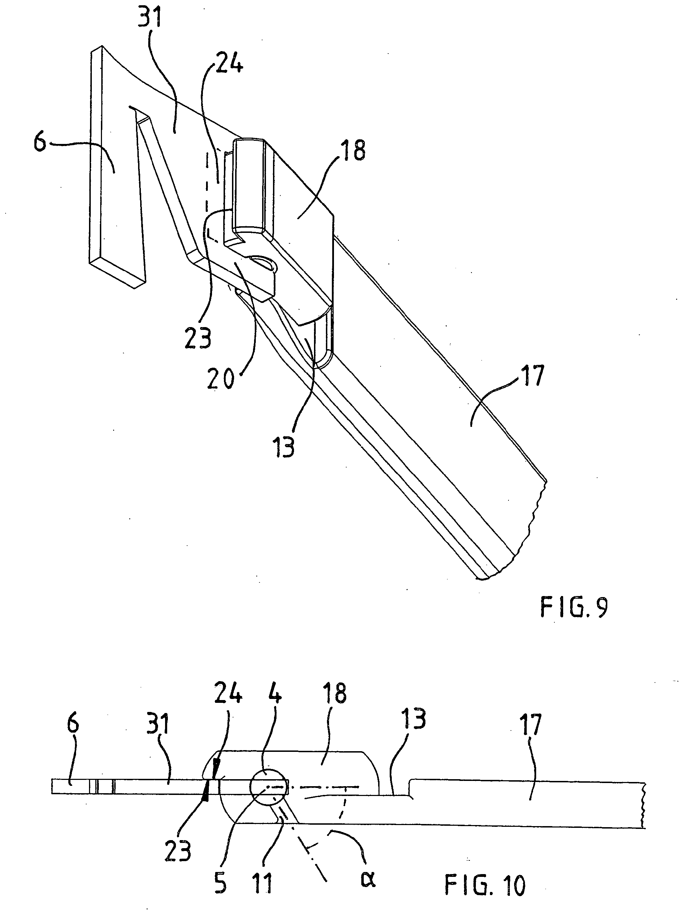

Das Backenteil 1;21;31 ist in den Figuren 1-4 und 7-10 noch in der Ebene der Brillenfassung 6 unverformt dargestellt, wohingegen es in den Figuren 5 und 6 nach hinten umgebogen gezeigt ist. Das Backenteil 1 der ersten Variante weist eine Ausnehmung 2 auf, die etwa rechtwinklig ausgebildet ist und zwei von oben und unten nach innen gerichtete Vorsprünge 8 aufweist, die der Lagerung des Scharnierstiftes 4 dienen und im montierten Zustand in die Aufnahmen 9 in den Stirnseiten des Scharnierstiftes 4 eingreifen und ihn so gegen ein Verdrehen sichern. Beim Backenteil 21 der zweiten Variante, wie sie in der Figur 7 dargestellt ist, ist die Ausnehmung 22 ähnlich wie in der ersten Variante ausgeführt, nur ist der Rahmen 16 hinten teilweise offen, wohingegen der Rahmen 20 der dritten Variante, wie sie in den Figuren 8-10 dargestellt ist, bis zu den Vorsprüngen verkürzt ist, sodass die Ausnehmung 32 die Form einer T-Nut aufweist.

Die Montage des Brillenbügelscharniers erfolgt so, dass zunächst der Scharnierstift 4 in die Stiftaufnahme 10 eingesetzt und mit seinen Aufnahmen 9 in eine Flucht mit den Montagenuten 11 des Gelenkteils 3;18 gebracht wird, woraufhin das Gelenkteil 3;18 in die Ausnehmung 2;22 des Backenteils 1,21 eingeführt bzw. von hinten an die Ausnehmung 32 des Backenteils 31 herangeführt wird, so dass die Aufnahmen 9 und die Montagenuten 11 in einer Flucht mit den Vorsprüngen 8 liegen und das Gelenkteil 3;18 seitlich auf diese aufgeschoben werden kann, bis die Mittelachse 15 der Stiftaufnahme 10 bzw. des Scharnierstiftes 4 auf der Schwenkachse 5 des Brillenbügelscharniers liegen, woraufhin der Brillenbügel 7;17 um die Schwenkachse 5 verschwenkbar ist und in allen anderen Richtungen formschlüssig im Backenteil 1;21;31 festgelegt ist.

In einer Benutzungsstellung schlägt die Anschlagfläche 13 des Gelenkteils 3 des Brillenbügels 7 der ersten Variante an einer Anschlagfläche 14 des Rahmens 12 des Backenteils 1 an und begrenzt so den Schwenkwinkel des Brillenbügels 7. Bei der zweiten Variante gemäß Figur 7 schlägt die Anschlagfläche 13 des Brillenbügels 7 in einer Benutzungsstellung hierzu an zwei Anschlagflächen 14 des hinten offenen Rahmens 16 des Backenteils 21 an. In der dritten Variante schlägt in einer Benutzungsstellung eine nach vorne gerichtete Anschlagfläche 23 des Gelenkteils 18 des Brillenbügels 17 an einer vorderen Anschlagfläche 24 des Rahmens 20 des Backenteils 31 an.

Zeichnerisch nicht dargestellt ist eine vierte Variante des Brillenbügelscharniers, bei dem der von dem Backenteil 1;21 nach hinten weisende innere Bereich des Rahmens 12;16 und sein vorderer äußerer Bereich jeweils mindestens eine Anschlagfläche 14;24 bilden und der Gelenkteil 18 des Brillenbügels 17 eine hintere Anschlagfläche 13 und eine vordere Anschlagfläche 23 für die Anschlagflächen 14;24 des Rahmens 12;16 aufweist, sodass die gegenseitigen Anschlagflächen 13;14;23;24 in einer Funktionsstellung der Brille gemeinsam aneinander anliegen.

Die Demontage eines Brillenbügels 7,17 erfolgt jeweils in genau umgekehrter Reihenfolge ohne die Zuhilfenahme von Werkzeug.

## Patentansprüche

1. Brillenbügelscharnier einer Brille, aus einem brillenfassungsfesten Backenbauteil (1;21;31) der Brillenfassung (6) je Seite, mit je einer Ausnehmung (2;22;32) und mit einem dort eingreifenden brillenbügelfesten Gelenkteil (3;18) eines Brillenbügels (7;17) sowie mit einem dazwischen angeordneten Scharnierstift (4), **dadurch gekennzeichnet, dass** die Ausnehmung (2;22;32) im Bereich einer in einer vertikalen Richtung verlaufenden Schwenkachse (5) des Brillenbügels (7;17) zwei in Richtung der Scharnierachse (15) einander gegenüberliegende, zueinander gerichtete und voneinander beabstandete Vorsprünge (8) aufweist, die maximal die Breite des Durchmessermaßes des Scharnierstiftes (4) besitzen, der Scharnierstift (4) zwei stirnseitige Aufnahmenuten (9) aufweist, in die im montierten Zustand die korrespondierenden Vorsprünge (8) eingesetzt sind, und dass das Gelenkteil (3;18) eine Stiftaufnahme (10) für den Scharnierstift (4) besitzt, sowie zwei mit den Abmessungen der stirnseitigen Aufnahmen (9) korrespondierende Montagenuten (11), die sich stirnseitig radial aus der Stiftaufnahme (10) bis zur seitlichen Oberfläche des Gelenkteils (3;18) erstrecken und in einer Montageposition des Brillenbügels (7;17) mit den Aufnahmen (9) des Scharnierstiftes (4) fluchten, derart, dass zur Montage die Vorsprünge (8) durch die Montagenuten (11) in die Aufnahmenuten (9) geschoben werden können.

2. Brillenbügelscharnier nach Anspruch 1, **dadurch gekennzeichnet, dass** die Montagenuten (11) in einem Winkel α zur Längsachse eines Brillenbügels (7;17) im Gelenkteil (3;18) eingebracht sind, der weniger als 90° beträgt.

3. Brillenbügelscharnier nach einem der vorgenannten Ansprüche, **dadurch gekennzeichnet, dass** das Gelenkteil (3;18) und der Scharnierstift (4) aufeinander abgestimmte Materialeigenschaften und leichte Presspassungen in Bezug auf die geforderten Laufeigenschaften, wie der Gleit- und Haftreibung, aufweisen und aus identischen Materialien oder einer Materialkombination bestehen.

4. Brillenbügelscharnier nach einem der vorgenannten Ansprüche, **dadurch gekennzeichnet, dass** die Ausnehmung (2;22;32) bis auf die sich dort hinein erstreckenden Vorsprünge (8) rechteckig ausgebildet ist und entweder einen geschlossenen Rahmen (12) oder einen nach hinten oder seitlich offenen Rahmen (22;32) bildet und die Vorsprünge (8) darin so angeordnet sind, dass das Gelenkteil (3;18) daneben oder frei von der Seite in die Ausnehmung (2;22;32) einführbar ist.

5. Brillenbügelscharnier nach Anspruch 4, **dadurch gekennzeichnet, dass** das Gelenkteil (3:18) des Brillenbügels (7;17) mit seinen Montagenuten (11) in eine Flucht mit den Vorsprüngen (8) bringbar und in der Ausnehmung (2;22;32) seitlich verschiebbar ausgebildet ist, bis die Mittelachse (15) des Scharnierstiftes (4) mit der Schwenkachse (5) übereinstimmt, woraufhin der Brillenbügel (7;17) um diese Schwenkachse (5) verschwenkbar und in jeder anderen Winkelstellung formschlüssig an dem Backenteil (1;21;31) der Brillenfassung (6) festgelegt ist.

6. Brillenbügelscharnier nach Anspruch 4, **dadurch gekennzeichnet, dass** der von dem Backenteil (1;21) nach hinten weisende innere Bereich des Rahmens (12;16) mindestens eine Anschlagfläche (14) bildet und der Gelenkteil (3) des Brillenbügels (7) eine Anschlagfläche (13) für die Anschlagfläche (14) des Rahmens (12;16) aufweist.

7. Brillenbügelscharnier nach Anspruch 4, **dadurch gekennzeichnet, dass** der von dem Backenteil (31) vordere äußere Bereich des Rahmens (20) mindestens eine Anschlagfläche (24) bildet und der Gelenkteil (18) des Brillenbügels (17) eine vordere Anschlagfläche (23) für die Anschlagfläche (24) des Rahmens (20) aufweist.

8. Brillenbügelscharnier nach Anspruch 4, **dadurch gekennzeichnet, dass** der von dem Backenteil (1;21) nach hinten weisende innere Bereich des Rahmens (12;16) und sein vorderer äußerer Bereich jeweils mindestens eine Anschlagfläche (14;24) bilden und der Gelenkteil (18) des Brillenbügels (17) eine hintere Anschlagfläche (13) und eine vordere Anschlagfläche (23) für die Anschlagflächen (14;24) des Rahmens (12;16) aufweist.

9. Brillenbügelscharnier nach eine der Ansprüche 6 bis 8, **dadurch gekennzeichnet, dass** die gegenseitigen Anschlagflächen (13;14;23;24) in einer Funktionsstellung der Brille aneinander anliegen.

10. Brillenbügelscharnier nach einem der vorgenannten Ansprüche, **dadurch gekennzeichnet, dass** es frei ist von mechanischen oder stoffschlüssigen Verbindungsmitteln oder Klebeverbindungen.

## Claims

1. Spectacle temple hinge of a pair of spectacles, composed of a frame-mounted jaw component (1; 21; 31) on each side of the spectacle frame (6), each with a recess (2; 22; 32), and with a temple-mounted joint part (3; 18) of a spectacle temple (7; 17) engaging therein, and with a hinge pin (4) arranged therebetween, **characterized in that** the recess (2; 22; 32), in the region of a vertically extending pivot axis (5) of the spectacle temple (7; 17), has two projections (8) which lie opposite each other in the direction of the hinge axis (15), are directed towards each other and are spaced apart from each other and which have at most the width of the diameter dimension of the hinge pin (4), the hinge pin (4) has two end-side receiving grooves (9) in which the corresponding projections (8) are inserted in the assembled state, and **in that** the joint part (3; 18) has a pin receptacle (10) for the hinge pin (4), and also two mounting grooves (11) which correspond to the dimensions of the end-side receptacles (9) and which at the front extend radially out from the pin receptacle (10) to the lateral surface of the joint part (3; 18) and, in a mounted position of the spectacle temple (7; 17), are aligned with the receptacles (9) of the hinge pin (4) in such a way that, in order to permit assembly, the projections (8) can be pushed through the mounting groves (11) into the receiving grooves (9).

2. Spectacle temple hinge according to Claim 1, **characterized in that** the mounting grooves (11) are introduced into the joint part (3; 18) at an angle α to the longitudinal axis of a spectacle temple (7; 17) that is less than 90°.

3. Spectacle temple hinge according to either of the preceding claims, **characterized in that** the joint part (3; 18) and the hinge pin (4) have material properties adapted to each other and light interference fits with respect to the required anti-frictional properties, such as sliding friction and static friction, and are made from identical materials or a combination of materials.

4. Spectacle temple hinge according to one of the preceding claims, **characterized in that** the recess (2; 22; 32) is rectangular except for the projections (8) extending therein and forms either a closed framework (12) or a framework (22; 32) open to the rear or to the sides, and the projections (8) are arranged therein such that the joint part (3; 18) can be inserted, next to them or freely from the side, into the recess (2; 22; 32).

5. Spectacle temple hinge according to Claim 4, **characterized in that** the joint part (3; 18) of the spectacle temple (7; 17) with its mounting grooves (11) can be brought into alignment with the projections (8) and is designed to be laterally displaceable in the recess (2; 22; 32) until the central axis (15) of the hinge pin (4) coincides with the pivot axis (5), whereupon the spectacle temple (7; 17) is pivotable about this pivot axis (5) and in every other angular position is secured with form-fit engagement on the jaw part (1; 21; 31) of the spectacle frame (6).

6. Spectacle temple hinge according to Claim 4, **characterized in that** the inner region of the framework (12; 16) facing rearwards from the jaw part (1; 21) forms at least one stop surface (14), and the joint part (3) of the spectacle temple (7) has a stop surface (13) for the stop surface (14) of the framework (12; 16).

7. Spectacle temple hinge according to Claim 4, **characterized in that** the outer region of the framework (20) facing forwards from the jaw part (31) forms at least one stop surface (24), and the joint part (18) of the spectacle temple (17) has a front stop surface (23) for the stop surface (24) of the framework (20).

8. Spectacle temple hinge according to Claim 4, **characterized in that** the inner region of the framework (12; 16), facing rearwards from the jaw part (1; 21), and its front outer region each form at least one stop surface (14; 24), and the joint part (18) of the spectacle temple (17) has a rear stop surface (13) and a front stop surface (23) for the stop surfaces (14; 24) of the framework (12; 16).

9. Spectacle temple hinge according to one of Claims 6 to 8, **characterized in that** the mutual stop surfaces (13; 14; 23; 24) bear on each other in a functional position of the spectacles.

10. Spectacle temple hinge according to one of the preceding claims, **characterized in that** it is free of mechanical or materially bonded connecting means or adhesive connections.

## Revendications

1. Charnière de lunettes d'une paire de lunettes, composée d'une pièce d'appui (1; 21; 31) fixée à la monture de lunettes de la monture de lunettes (6) par côté, avec chacune une découpe (2; 22; 32) et avec une pièce d'articulation (3; 18) fixée à une branche de lunettes et s'engageant dans celle-ci d'une branche de lunettes (7; 17) ainsi qu'avec une broche de charnière (4) agencée entre celles-ci, **caractérisée en ce que** la découpe (2; 22; 32) présente dans la région d'un axe de pivotement (5) s'étendant en direction verticale de la branche de lunettes (7; 17) deux saillies (8) opposées l'une à l'autre dans la direction de l'axe de charnière (15), orientées l'une vers l'autre et espacées l'une de l'autre, qui possèdent au maximum la largeur de la dimension diamétrale de la broche de charnière (4), la broche de charnière (4) présente deux rainures de réception frontales (9), dans lesquelles à l'état monté les saillies correspondantes (8) sont introduites, et **en ce que** la pièce d'articulation (3; 18) comporte un logement de broche (10) pour la broche de charnière (4), ainsi que deux rainures de montage (11) qui correspondent aux dimensions des logements frontaux (9), qui s'étendent frontalement radialement hors du logement de broche (10) jusqu'à la surface latérale de la pièce d'articulation (3; 18) et qui dans une position de montage de la branche de lunettes (7; 17) s'alignent avec les logements (9) de la broche de charnière (4), de telle manière que pour le montage les saillies (8) puissent être glissées à travers les rainures de montage (11) dans les rainures de réception (9).

2. Charnière de lunettes selon la revendication 1, **caractérisée en ce que** les rainures de montage (11) sont pratiquées sous un angle 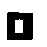 par rapport à l'axe longitudinal d'une branche de lunettes (7; 17) dans la pièce d'articulation (3; 18), qui est inférieur à 90°.

3. Charnière de lunettes selon l'une quelconque des revendications précédentes, **caractérisée en ce que** la pièce d'articulation (3; 18) et la broche de charnière (4) présentent des propriétés de matériau accordées l'une à l'autre et des ajustements serrés légers par rapport aux propriétés de mouvement requises, comme le frottement glissant et statique, et se composent de matériaux ou d'une combinaison de matériaux identiques).

4. Charnière de lunettes selon l'une quelconque des revendications précédentes, **caractérisée en ce que** la découpe (2; 22; 32) est de forme rectangulaire jusqu'aux saillies (8) qui s'y étendent vers l'intérieur et forme soit un cadre fermé (12) soit un cadre ouvert vers l'arrière ou latéralement (22; 32), et les saillies (8) y sont disposées de telle manière que la pièce d'articulation (3; 18) puisse être introduite à côté de celles-ci ou par le côté dans la découpe (2; 22; 32).

5. Charnière de lunettes selon la revendication 4, **caractérisée en ce que** la pièce d'articulation (3; 18) de la branche de lunettes (7; 17) est configurée de façon pouvant être placée avec ses rainures de montage (11) en alignement avec les saillies (8) et déplacée latéralement dans la découpe (2; 22; 32), jusqu'à ce que l'axe central (15) de la broche de charnière (4) coïncide avec l'axe de pivotement (5), puis la branche de lunettes (7; 17) peut pivoter autour de cet axe de pivotement (5) et est fixée dans chaque autre position angulaire par emboîtement sur la pièce d'appui (1; 21; 31) de la monture de lunettes (6).

6. Charnière de lunettes selon la revendication 4, **caractérisée en ce que** la région intérieure du cadre (12; 16) tournée vers l'arrière de la pièce d'appui (1; 21) forme au moins une face de butée (14) et la pièce d'articulation (3) de la branche de lunettes (7) présente une face de butée (13) pour la face de butée (14) du cadre (12; 16).

7. Charnière de lunettes selon la revendication 4, **caractérisée en ce que** la région extérieure avant du cadre (20) de la pièce d'appui (31) forme au moins une face de butée (24) et la pièce d'articulation (18) de la branche de lunettes (17) présente une face de butée avant (23) pour la face de butée (24) du cadre (20).

8. Charnière de lunettes selon la revendication 4, **caractérisée en ce que** la région intérieure du cadre (12; 16) tournée vers l'arrière de la pièce d'appui (1; 21) et sa région extérieure avant forment respectivement au moins une face de butée (14; 24) et la pièce d'articulation (18) de la branche de lunettes (17) présente une face de butée arrière (13) et une face de butée avant (23) pour les faces de butée (14; 24) du cadre (12; 16).

9. Charnière de lunettes selon l'une quelconque des revendications 6 à 8, **caractérisée en ce que** les faces de butée opposées (13; 14; 23; 24) s'appliquent l'une sur l'autre dans une position fonctionnelle des lunettes.

10. Charnière de lunettes selon l'une quelconque des revendications précédentes, **caractérisée en ce qu'**elle est dépourvue de moyens de liaison mécaniques ou matériels ou d'assemblages collés.
